# EUROPÄISCHE PATENTANMELDUNG

(11) **EP 3 490 093 A1**
(43) Veröffentlichungstag der Anmeldung: **29.05.2019**
(21) Anmeldenummer: 18206722.3
(22) Anmeldetag: 16.11.2018
(51) Int. Cl.: H02J 3/06, H02J 3/00, H02J 13/00

(54) **ENERGIEVERSORGUNGSNETZWERKE UND -VERFAHREN**

(30) Priorität: 27.11.2017 DE 102017221145
(71) Anmelder: Siemens Aktiengesellschaft, 80333 München (DE)
(72) Erfinder: Holzapfel, Johann, 2134 Staatz-Kautendorf (AT); Pfeifer, Christian, 91054 Erlangen (DE); Rentschler, Alexander, 64625 Bensheim (DE); Wallner, Christian, 91058 Erlangen (DE)

(57) **Zusammenfassung**

Bereitgestellt ist ein Verfahren, elektrischen Energiebedarf mindestens zweier Haushaltsnetzwerke (25a, 26a) zu decken, wobei jedes Haushaltsnetzwerk mindestens einen haushaltseigenen Verbraucher (45a) von elektrischer Energie, mindestens einen haushaltseigenen Erzeuger (47a) von elektrischer Energie und mindestens einen haushaltseigenen Speicher (49a) zum Speichern von Energie aufweist, wobei das Verfahren aufweist: Bestimmen von Messdaten betreffend Energieflüssen in einem haushaltseigenen Energieleitungsnetzwerk jedes Haushaltsnetzwerkes; Steuern, basierend auf den Messdaten, in Abhängigkeit von Bedarf, Erzeugung und/oder Speicherladezustand, eines Flusses von Energie zwischen dem haushaltseigenen Erzeuger, Verbraucher und Speicher jedes Haushaltsnetzwerkes; einer ersten Steuerung (27a) eines ersten Energieversorgungsnetzwerkes (5a), Anzeigen eines Bedarfes an Energie bzw. eines Überschusses an Energie zumindest eines der Haushaltsnetzwerke, wobei die Haushaltsnetzwerke innerhalb des ersten Energieversorgungsnetzwerkes gekoppelt sind; und Steuern eines Flusses von elektrischer Energie zu und von den Haushaltsnetzwerken in Abhängigkeit von Bedarf an Energie und Überschuss an Energie der Haushaltsnetzwerke.

## Beschreibung

Die vorliegende Erfindung betrifft ein erstes Energieversorgungsnetzwerk, insbesondere ein lokales Energieversorgungsnetzwerk mit mehreren Haushaltsnetzwerken, und betrifft ferner ein zweites Energieversorgungsnetzwerk, auch als ein Mittelspannungsnetzwerk bzw. übergeordnetes Netzwerk bezeichnet, das mehrere lokale Energieversorgungsnetzwerke umfasst.

In elektrischen Energieversorgungssystemen besteht die Notwendigkeit, dass bei absehbar stark ansteigendem Bedarf an kurzfristiger Versorgung mit hohen Energiemengen die Versorgungssicherheit und Stabilität im Verteilernetz des Energieversorgungs-Unternehmens bis hin zum Ortsnetz der Endverbraucher gewährleistet wird.

Dabei sind die folgenden Aspekte zu berücksichtigen:
- Der Bedarf bzgl. Ort, Zeitpunkt, Zeitspanne und benötigter Leistung wird nicht konstant sein und dieser statistischen Streuung muss Rechnung getragen werden.
- Der Entwicklung hin zu dezentraler und lokaler/privater Energieversorgung und Energieerzeugung (mit oder ohne lokalen Energiespeicher) muss berücksichtigt werden.
- Die Erzeugung von Elektrizität aus regenerativen Quellen ist ebenfalls zeitlich nicht konstant.
- Neben dem Bedarf durch E-Mobilität wird auch der generelle Bedarf an elektrischer Energie durch Verbraucher in häuslicher Umgebung steigen.
- Privatverbraucher wollen sich in Ihrem Umfeld aufgrund von Energieengpässen und Überschüssen in ihren Gewohnheiten nicht einschränken lassen.
- Der Neubau von Infrastruktur zum Transport elektrischer Energie soll soweit es geht vermieden werden, da Änderungen/Erweiterungen teilweise langwierigen Genehmigungsverfahren unterliegen als auch ein hohes Investitionsvolumen haben.

Herkömmlicherweise sind keine Systeme bekannt, die die eingangs genannten Aspekte in einem Konzept vereinen:
- Dämpfung von Energielastspitzen im Verteilnetz
- Kleinere Netze, lokale Energieversorgung
- Hohe Anforderungen an Netzstabilität/Verfügbarkeit/Qualität
- Private Energieproduktion
- Privater Energiehandel durch Nutzung von EVU-Netzen
- EVU stellt Netz- und Lastflussregelung für die Übertragung von Energie zwischen privaten Herstellern und Verbrauchern zur Verfügung und kann damit auch selbst als Energie-Händler auftreten.

Somit gibt es einen Bedarf an einem Energieversorgungsnetzwerk, welches eine Versorgungssicherheit und Stabilität im Verteilernetz bis hin zum Ortsnetz der Endverbraucher, auch bei einem Bedarf an kurzfristiger Versorgung mit hohen Energiemengen, gewährleisten kann.

Somit ist es eine Aufgabe der vorliegenden Erfindung, ein Energieversorgungssystem, insbesondere ein erstes Energieversorgungsnetzwerk und auch ein zweites, übergeordnetes Energieversorgungsnetzwerk bereitzustellen, wobei Versorgungssicherheit und Stabilität der beiden Netze auch bei einem kurzfristigen hohen Bedarf an elektrischer Energie gewährleistet werden kann. Ferner ist es eine Aufgabe der vorliegenden Erfindung, ein entsprechendes Verfahren bereitzustellen.

Die Aufgabe wird durch den Gegenstand des unabhängigen Anspruchs 1, der auf ein erstes Energieversorgungsnetzwerk gerichtet ist, sowie durch die zusätzlichen Merkmale des Anspruchs 12 gelöst, welcher auf ein zweites Energieversorgungsnetzwerk gerichtet ist, und ferner durch Verfahren des Anspruchs 16 gelöst.

Das erste Energieversorgungsnetzwerk wird zuweilen auch als lokales Energieversorgungsnetzwerk bezeichnet und das zweite Energieversorgungsnetzwerk wird zuweilen auch als ein (dem ersten Energieversorgungsnetzwerk übergeordnetes) Mittelspannungsenergieversorgungsnetzwerk bezeichnet, in welches z.B. ein Energieversorgungs-Unternehmen (EVU) Energie aus Kraftwerken einspeist.

Gemäß einer Ausführungsform ist bereitgestellt ein erstes Energieversorgungsnetzwerk, aufweisend: mindestens zwei Haushaltsnetzwerke; eine erste Steuerung, welche ausgebildet ist, Fluss von elektrischer Energie zu und von den Haushaltsnetzwerken in Abhängigkeit von Bedarf und Erzeugung der Haushaltsnetzwerke zu steuern, wobei jedes Haushaltsnetzwerk aufweist: mindestens einen haushaltseigenen Verbraucher von elektrischer Energie, mindestens einen haushaltseigenen Erzeuger von elektrischer Energie und mindestens einen haushaltseigenen Speicher zum Speichern von Energie; ein Haushaltsnetzwerk-Messmodul, das zum Bestimmen von Messdaten betreffend Energieflüsse in dem haushaltseigenen Energieleitungsnetzwerk ausgebildet ist, eine Haushaltsnetzwerk-Steuerung, die die Messdaten erhält und die ausgebildet ist, in Abhängigkeit von Bedarf, Erzeugung und/oder Speicherladezustand, einen Fluss von Energie zwischen dem haushaltseigenen Erzeuger, Verbraucher und Speicher zu steuern und der ersten Steuerung einen Bedarf an Energie bzw. einen Überschuss an Energie anzuzeigen.

Ein Haushaltsnetzwerk kann z.B. ein Netzwerk einer Wohnung bzw. eines Wohnhauses umfassen. Das Haushaltsnetzwerk kann zur Versorgung eines ein- oder mehrköpfigen Haushalts, etwa eines Familienhaushalts ausgebildet sein. Das Haushaltsnetzwerk kann z.B. ein Eigenheim oder eine Wohnung mit elektrischer Energie versorgen. Die haushaltseigenen Verbraucher können z.B. Küchengeräte, Elektrogeräte, Haushaltsgeräte, Beleuchtung, Computer und dergleichen umfassen. Die haushaltseigenen Erzeuger können z.B. Fotovoltaik-Anlage(n), Windenergie-Erzeugungsanlage(n), Geothermie-Anlage(n), Wärmepumpe-Anlage(n) und eine Kombination der vorgenannten umfassen. Der Speicher kann z.B. einen Elektrospeicher, z.B. einen Akkumulator, insbesondere Lithiumionenbatterien umfassen. Der Speicher kann, muss jedoch nicht zum Speichern von elektrischer Energie ausgelegt sein. In anderen Ausführungsformen kann elektrische Energie in eine andere Energieform, etwa Wärmeenergie, vor der Speicherung konvertiert werden und die Wärmeenergie kann in einem Wärmespeicher gespeichert werden. Das Haushaltsnetzwerk-Messmodul kann zum Messen von elektrischen Leistungsströmen ausgebildet sein, insbesondere durch Messen von Strom und/oder Spannung innerhalb von Leitungen des haushaltseigenen Energieleitungsnetzes.

Die Haushaltsnetzwerk-Steuerung kann einen elektronischen Speicher, eine arithmetisch-logische Einheit umfassen und kann z.B. als ein herkömmlicher Computer ausgebildet sein oder einen herkömmlichen Computer umfassen. Die Haushaltsnetzwerk-Steuerung kann zum Steuern der Energieflüsse bzw. elektrischen Leistungsflüsse eine Schalteinheit umfassen, welche z.B. Leistungstransistoren aufweist, welche z.B. Verbraucher, Speicher und/oder Erzeuger selektiv miteinander zu verbinden ausgebildet ist.

Die Haushaltsnetzwerke können gemäß Ausführungsform der vorliegenden Erfindung ihren Bedarf an elektrischer Energie im Wesentlichen selbst decken, indem z.B. bei Energieüberschuss Energie in den haushaltseigenen Speicher gespeichert wird und bei Energiebedarf Energie aus dem Speicher entnommen wird.

Die erste Steuerung kann ausgebildet sein, einen Fluss von elektrischer Energie an ein Haushaltsnetzwerk zu richten, falls das betreffende Haushaltsnetzwerk einen Energiebedarf hat, welcher durch den haushaltseigenen Speicher und/oder dem haushaltseigenen Erzeuger nicht gedeckt werden kann. Die erste Steuerung kann auch eine arithmetisch-logische Einheit und einen elektronischen Speicher aufweisen und kann z.B. einen herkömmlichen Computer aufweisen, der entsprechend programmiert ist. Damit kann ein stabiles Energieversorgungssystem bereitgestellt sein.

Gemäß einer Ausführungsform der vorliegenden Erfindung weist das erste Energieversorgungsnetzwerk auf: ein erstes Datenleitungsnetzwerk, das zur Kommunikation mit den Haushaltsnetzwerken, insbesondere den Haushaltsnetzwerk-Steuerungen ausgebildet ist; ein erstes Energieleitungsnetzwerk, das zur Zuführung und Abführung von elektrischer Energie an bzw. von den Haushaltsnetzwerken ausgebildet ist; einen ersten Speicher zur Speicherung von Energie; insbesondere mindestens einen ersten elektrischen Erzeuger zur Erzeugung von elektrischer Energie; insbesondere mindestens einen ersten elektrischen Verbraucher von elektrischer Energie, insbesondere zumindest eine Ladestation von E-Mobilität ausweisend.

Das Datenleitungsnetzwerk kann z.B. als ein Ethernet ausgebildet sein oder als ein solches umfassen. Das Datenleitungsnetzwerk kann über drahtgebundene Leitungen oder drahtlose Verbindungen verfügen. Über das erste Datenleitungsnetzwerk können Messdaten von den Haushaltsnetzwerken der ersten Steuerung zugeführt werden.

Das erste Energieversorgungsnetzwerk kann, muss jedoch keinen eigenen ersten elektrischen Erzeuger umfassen und kann, muss jedoch nicht notwendigerweise mindestens einen ersten elektrischen Verbraucher umfassen. Das erste Energieversorgungsnetzwerk wird wie oben erwähnt ist, auch als ein lokales Netz bezeichnet, und kann z.B. ein elektrisches Netzwerk eines Straßenzuges (einer Stadt oder Ortschaft) umfassen, welches mehrere Privathaushalte mit elektrischer Energie versorgen kann. Der erste elektrische Erzeuger kann z.B. eine Fotovoltaik-Anlage, eine Geothermie-Anlage, eine Wärmepumpe, eine Windkraftanlage oder eine Kombination der vorgenannten umfassen. Der Verbraucher kann z.B. eine Ladestation zum Aufladen eines Elektrofahrzeuges umfassen.

Gemäß einer Ausführungsform der vorliegenden Erfindung weist zumindest eines der Haushaltsnetzwerke auf: ein haushaltseigenes Energieleitungsnetzwerk, über das der haushaltseigene Verbraucher, der haushaltseigene Erzeuger und der haushaltseigene Speicher verbunden sind; ein haushalteigenes Datenleitungsnetzwerk, über das das Haushaltsnetzwerk-Messmodul und die Haushaltsnetzwerk-Steuerung verbunden sind, wobei das Haushaltsnetzwerk-Messmodul insbesondere zum Messen und/oder Bestimmen von aktuellem Verbrauch an Energie, aktueller Erzeugung von Energie, Ladezustand des haushaltseigenen Speichers, insbesondere prognostiziertem Verbrauch an Energie, insbesondere prognostizierter Erzeugung von Energie ausgebildet ist.

Das haushaltseigene Energieleitungsnetzwerk kann ein herkömmliches 220V-Netzwerk umfassen. Die Haushaltsnetzwerk-Steuerung kann ausgebildet sein, selektiv bestimmte Verbraucher, bestimmte Erzeuger und Speicher miteinander bedarfsabhängig zu verbinden. Wenn aktueller Verbrauch von Energie, aktuelle Erzeugung von Energie, Ladezustand des haushaltseigenen Speichers sowie insbesondere auch prognostizierter Verbrauch und/oder prognostizierte Erzeugung von Energie von der Haushaltsnetzwerk-Steuerung berücksichtigt werden, kann das Haushaltsnetzwerk weitgehend autark arbeiten, ohne einen weiteren Energiebedarf von dem ersten Energieversorgungsnetzwerk zu benötigen. Damit kann das erste Energieversorgungsnetzwerk entlastet werden und die Stabilität gewährleistet werden.

Gemäß einer Ausführungsform der vorliegenden Erfindung wird von den Haushaltsnetzwerken zumindest eines der folgenden Daten über das Datenleitungsnetzwerk an die erste Steuerung vermittelt: aktueller haushaltseigener Verbrauch an Energie; aktuelle haushaltseigene Erzeugung von Energie; prognostizierter haushaltseigener Verbrauch an Energie; prognostizierte haushaltseigene Erzeugung von Energie; Ladezustand des haushaltseigenen Speichers.

Wenn die erste Steuerung derartige Daten von den Haushaltsnetzwerken erhält, kann ein Energiefluss zwischen verschiedenen Haushaltsnetzwerken effektiver bestimmt und durchgeführt werden. Zum Beispiel kann für ein bestimmtes Haushaltsnetzwerk von den übermittelten Daten angezeigt sein, dass in der nahen Zukunft (oder momentan) ein Energieüberschuss vorhanden sein wird. Von einem weiteren Haushaltsnetzwerk kann aufgrund der Analyse der übertragenen Daten ableitbar sein, dass ein zukünftiger (oder momentaner) Energiebedarf existieren wird. In diesem Fall kann Energie von dem Haushaltsnetzwerk, welches zukünftig (oder momentan) einen Überschuss von Energie bereitstellen wird, an dasjenige Haushaltsnetzwerk übertragen bzw. gehandelt werden, in dem zukünftig (oder momentan) ein Energiebedarf existieren wird. Damit kann sowohl das erste Energieversorgungsnetzwerk als auch ein übergeordnetes zweites Energieversorgungsnetzwerk von der Bereitstellung weiterer Energie verschont bzw. geringer belastet werden.

Gemäß einer Ausführungsform der vorliegenden Erfindung weist zumindest eines der Haushaltsnetzwerke und/oder das erste Energieversorgungsnetzwerk ein Energiehandel-Modul auf, das zum Energiehandel mit einem anderen Netzwerk, z.B. einem anderen Haushaltsnetzwerk oder einem anderen ersten Energieversorgungsnetzwerk ausgebildet ist. Das Energiehandel-Modul kann ausgebildet sein, Energieangebote bzw. Energiebedarfsanfragen von verschiedenen Haushaltsnetzwerken oder verschiedenen ersten Energieversorgungsnetzwerken zu verwalten und allen Teilnehmern des Energiehandels zur Verfügung zu stellen. Dazu können sich z.B. die Haushaltsnetzwerk-Steuerung oder die erste Steuerung kommunikativ mit dem Energiehandel-Modul, welches z.B. als ein Server ausgebildet sein kann, verbinden. Das Energiehandel-Modul kann auch ein Abrechnungsmodul zur Abrechnung der gehandelten Energie umfassen.

Die Haushaltsnetzwerk-Steuerung und/oder die erste Steuerung können jeweils konfiguriert sein, um eine Charakteristik der jeweiligen Netzwerke, die sie steuern, zu definieren. Die Netzwerkcharakteristik kann z.B. die Anzahl und die Art der Erzeuger, Verbraucher und Speicher und auch die Topologie des Netzwerks spezifizieren. Die Charakteristik der jeweiligen Netzwerke kann auch dazu verwendet werden, um Prognosen einer Erzeugung oder eines Verbrauchs in der Zukunft abzuleiten. Diese Prognosen können zum Bestimmen bzw. Bewirken der Energieflüsse herangezogen werden.

Gemäß einer Ausführungsform der vorliegenden Erfindung weist zumindest eines der Haushaltsnetzwerke und/oder das erste Energieversorgungsnetzwerk auf: eine Datenschnittstelle zu einen externen Server zum Erhalten von Wetter-Daten, insbesondere Wetter-Vorhersage-Daten, die von der ersten Steuerung und/oder der haushaltseigenen Steuerung zum Steuern der Energieflüsse verwendet werden; und/oder einen Datenspeicher zum Aufzeichnen von Energieflüssen, wobei die jeweilige Steuerung ausgebildet ist, aus den aufgezeichneten Energieflüssen eine Vorhersage über zukünftige Energieflüsse zu erstellen.

Die Wetterdaten bzw. Wetter-Vorhersagen-Daten können zum Bestimmen des aktuellen und/oder des prognostizierten Bedarfs und der Erzeugung herangezogen werden, insbesondere wenn der Erzeuger eine Fotovoltaik-Anlage oder eine Windenergie-Anlage umfasst. Energieflüsse, welche in der Vergangenheit aufgezeichnet worden sind, können eine Vorhersage über zukünftige Energieflüsse ermöglichen. Insbesondere können Zeitintervalle bestimmt werden, insbesondere für jedes Haushaltsnetzwerk, in welchem ein Überschuss an Energie vorhanden ist (bzw. sein wird) bzw. ein Bedarf an Energie vorhanden ist (bzw. sein wird) oder voraussichtlich vorhanden sein wird. Damit kann ein verbesserter Austausch von Energie zwischen verschiedenen Haushaltsnetzwerken gesteuert werden.

Gemäß einer Ausführungsform der vorliegenden Erfindung erhält die erste Steuerung zumindest eines der folgenden Daten: Menge der Erzeugung des ersten Erzeugers; Ladezustand des ersten Speichers; elektrische Charakteristik des ersten Energieversorgungsnetzwerks; elektrische Charakteristik eines übergeordneten zweiten Energieversorgungsnetzwerks; Vorhersage über Menge von erwarteter Erzeugung des ersten Erzeugers.

Wenn die erste Steuerung derartige Daten erhält, können die Energieflüsse verbessert gesteuert werden. Die elektrische Charakteristik kann z.B. auch die Spannung und/oder Topologie, Anzahl und Art des ersten Speichers, Anzahl und Art des ersten Erzeugers und Anzahl und Art des ersten Verbrauchers umfassen.

Gemäß einer Ausführungsform der vorliegenden Erfindung weist die erste Steuerung zumindest eines der folgenden auf oder ist damit verbunden: eine erste Schalteinheit zum Schalten von Energieflüssen zwischen den Haushaltsnetzwerken und/oder dem ersten Speicher und/oder erstem Erzeuger und/oder erstem Verbraucher und/oder einem übergeordneten zweiten Energieversorgungsnetzwerk; ein erstes Messmodul zum Bestimmen von Messdaten betreffend Energieflüsse zwischen den Haushaltsnetzwerken und/oder dem ersten Speicher und/oder erstem Erzeuger und/oder erstem Verbraucher und/oder einem übergeordneten zweiten Netzwerk.

Die erste Schaltereinheit kann z.B. eine Mehrzahl von Leistungstransistoren umfassen, welche durch Gate-Signale gesteuert werden können, um selektiv bestimmte Leistungsverbindungen herzustellen bzw. zu unterbrechen. Das erste Messmittel kann auch zum Messen von Strom und Spannung innerhalb des ersten Leistungsleitungsnetzes ausgebildet sein. Die erste Steuerung (wie auch die haushaltseigene Steuerung) kann auch ein Vorhersage-Modul zum Vorhersagen von zukünftigen Energieflüssen umfassen.

Gemäß einer Ausführungsform der vorliegenden Erfindung ist die erste Steuerung ausgebildet, einen Energiefluss aus einem übergeordneten zweiten Energieversorgungsnetzwerk zu einem Haushaltsnetzwerk zu schalten, dessen Verbrauch nicht durch Energie aus eigener Erzeugung oder aus eigenem Speicher gedeckt werden kann.

In anderen Ausführungsformen kann durch Energie-Handel zwischen einem Haushaltsnetzwerk, welches Bedarf an Energie hat, und einem anderen Haushaltsnetzwerk mit Energieüberschuss erfolgen, um die benötigte Energie von einem zu dem anderen Haushaltsnetzwerk nach Abschluss eines Energiehandelsvertrages zu übertragen.

Gemäß einer Ausführungsform der vorliegenden Erfindung ist die erste Steuerung ausgebildet, einen Energiefluss aus einem Haushaltsnetzwerk mit Energieüberschuss zu einem Haushaltsnetzwerk mit Energiebedarf zu schalten. Damit kann die in den Haushaltsnetzwerken zur Verfügung stehende Energie bzw. die benötigte Energie ausgetauscht werden, ohne zusätzlichen Energiebedarf aus dem ersten Erzeuger bzw. aus einem übergeordneten zweiten Energieversorgungssystem decken zu müssen.

Gemäß einer Ausführungsform der vorliegenden Erfindung ist ein erstes Energieversorgungsnetzwerk bereitgestellt, wobei das haushaltseigene Datenleitungsnetzwerk ausgebildet ist, Energieströme einer Haushaltsspannung von 150 V bis 250 V, insbesondere 220 V, zu befördern, wobei das erste Datenleitungsnetzwerk ausgebildet ist, Energieströme einer ersten Spannung von 300 V bis 500 V, insbesondere 400 V, zu befördern, wobei zwischen dem ersten Datenleitungsnetzwerk und dem haushaltseigenen Datenleitungsnetzwerk ein Transformator angeordnet ist, um zwischen der ersten Spannung und der Haushaltsspannung zu transformieren.

Damit kann ein Energieversorgungssystem aus mehreren Spannungsebenen bereitgestellt werden. Die höheren Spannungsebenen können die Übertragung von größerer Leistung ermöglichen als die unteren Spannungsebenen, ohne übermäßige Verluste mit sich zu bringen.

Gemäß einer Ausführungsform der vorliegenden Erfindung ist ein zweites Energieversorgungsnetzwerk bereitgestellt, aufweisend: zumindest zwei erste Energieversorgungsnetzwerke gemäß einer der vorangehenden Ausführungsformen; ein zweites Energieleitungsnetzwerk mit einem zweiten Speicher und/oder einem zweiten Erzeuger und/oder einem zweiten Verbraucher; eine zweite Steuerung, welche ausgebildet ist, Fluss von elektrischer Energie in dem zweiten Energieleitungsnetzwerk und zu und von den ersten Energieversorgungsnetzwerken und/oder zweitem Speicher und/oder zweitem Erzeuger und/oder zweitem Verbraucher in Abhängigkeit von Bedarf und Erzeugung der ersten Energieversorgungsnetzwerken zu steuern.

Das zweite Energieversorgungssystem kann ein zweites Datenleitungsnetzwerk umfassen, das ausgebildet ist, Energieströme einer zweiten Spannung von zwischen 100 kV und 150 kV, insbesondere etwa 110 kV, zu befördern. Das zweite Energieversorgungsnetzwerk kann auf der obersten Ebene z.B. von einem Energieversorgungs-Unternehmen betrieben werden.

Das zweite Energieversorgungsnetzwerk führt eine weitere übergeordnete Ebene ein, um effektiv mehrere erste Energieversorgungsnetzwerke durch Austausch von Energie oder Zuführung von Energie von einem Erzeuger oder einem zweiten Speicher bedarfsmäßig mit Energie zu versorgen. Der zweite Erzeuger kann z.B. ein Großkraftwerk umfassen, wie etwa ein Atomkraftwerk, ein Kohlekraftwerk, ein Wasserkraftwerk oder ein Sonnenkraftwerk, oder auch ein Windkraftwerk bzw. einen Windpark. Damit kann ein Austausch von Energie zwischen verschiedenen ersten Energieversorgungsnetzwerken erreicht werden, falls eines der ersten Energieversorgungsnetzwerke einen Energiebedarf hat und ein anderes der ersten Energieversorgungsnetzwerke einen Überschuss an Energie zur Verfügung hat. Damit kann das übergeordnete (Mittelspannungsenergieversorgungsnetzwerk) zweite Energieversorgungsnetzwerk von einer Belastung verschont werden.

Gemäß einer Ausführungsform der vorliegenden Erfindung weist die zweite Steuerung zumindest eines der folgenden auf oder ist damit verbunden: eine zweite Schalteinheit zum Schalten von Energieflüssen zwischen den ersten Energieversorgungsnetzwerken und/oder dem zweiten Speicher und/oder dem zweiten Verbraucher und/oder dem zweiten Erzeuger; ein zweites Messmodul zum Bestimmen von Messdaten betreffend Energieflüsse zwischen den ersten Energieversorgungsnetzwerken und/oder dem zweiten Speicher und/oder dem zweiten Verbraucher und/oder dem zweiten Erzeuger.

Auch die zweite Schalteinheit kann eine Mehrzahl von Leistungstransistoren umfassen, um bestimmte Leistungsverbindungen innerhalb des zweiten Energieleistungsnetzwerkes zu etablieren bzw. zu unterbrechen. Auch das zweite Messmodul kann zum Messen von Strom und/oder Spannung an verschiedenen Stellen des zweiten Energieleitungsnetzwerkes ausgebildet sein. Auch die zweite Steuerung kann ein Prognosemodul umfassen, um Energie der verschiedenen ersten Energieversorgungsnetzwerke hinsichtlich Bedarf bzw. Erzeugung zu prognostizieren.

Gemäß einer Ausführungsform der vorliegenden Erfindung wird von den ersten Energieversorgungsnetzwerken zumindest eines der folgenden Daten über das erste Datenleitungsnetzwerk an die zweite Steuerung übermittelt: aktueller Verbrauch an Energie; aktuelle Erzeugung von Energie; prognostizierter Verbrauch an Energie; prognostizierte Erzeugung von Energie; Ladezustand des ersten Speichers.

Der Verbrauch bzw. die Erzeugung bezieht sich dabei auf Verbrauch und Erzeugung innerhalb des betreffenden ersten Energieversorgungsnetzwerkes. Aufgrund dieser Daten kann die zweite Steuerung eine effektive Beförderung von Energie zwischen verschiedenen ersten Energieversorgungsnetzwerken schalten.

Gemäß einer Ausführungsform der vorliegenden Erfindung ist das zweite Energieversorgungsnetzwerk ausgebildet, den Bedarf und/oder die Erzeugung von Energie von ersten Energieversorgungsnetzwerken so zu steuern, dass durch Energieflüsse zwischen ihnen der jeweilige Bedarf gedeckt ist, insbesondere umfassend, Energie aus einem ersten Energieversorgungsnetzwerke in einen ersten Speicher eines anderen ersten Energieversorgungsnetzwerkes zu leiten, um einen zukünftigen Bedarf des anderen ersten Energieversorgungsnetzwerkes zu decken.

Gemäß einer weiteren Ausführungsform ist ein Verfahren zur Energieversorgung bereitgestellt, welches von dem ersten Energieversorgungsnetzwerk bzw. dem zweiten Energieversorgungsnetzwerk durchgeführt wird.

Es sollte verstanden werden, dass Merkmale, die individuell oder in irgendeiner Kombination im Zusammenhang mit einem ersten Energieversorgungsnetzwerk oder einem zweiten Energieversorgungsnetzwerk beschrieben, erläutert oder bereitgestellt sind, ebenso auf ein Verfahren zur Energieversorgung oder für ein Haushaltsnetzwerk-Messmodul oder für eine Haushaltsnetzwerk-Steuerung oder für ein Haushaltsnetzwerk, individuell oder in irgendeiner Kombination, angewendet werden können, gemäß Ausführungsformen der vorliegenden Erfindung und umgekehrt.

Gemäß einer Ausführungsform der vorliegenden Erfindung ist bereitgestellt ein Verfahren, elektrischen Energiebedarf mindestens zweier Haushaltsnetzwerke zu decken, wobei jedes Haushaltsnetzwerk mindestens einen haushaltseigenen Verbraucher von elektrischer Energie, mindestens einen haushaltseigenen Erzeuger von elektrischer Energie und mindestens einen haushaltseigenen Speicher zum Speichern von Energie aufweist. Dabei weist das Verfahren auf: Bestimmen von Messdaten betreffend Energieflüssen in einem haushaltseigenen Energieleitungsnetzwerk jedes Haushaltsnetzwerkes; Steuern, basierend auf den Messdaten, in Abhängigkeit von Bedarf, Erzeugung und/oder Speicherladezustand, eines Flusses von Energie zwischen dem haushaltseigenen Erzeuger, Verbraucher und Speicher jedes Haushaltsnetzwerkes; einer ersten Steuerung eines ersten Energieversorgungsnetzwerkes, Anzeigen eines Bedarfes an Energie bzw. eines Überschusses an Energie zumindest eines der Haushaltsnetzwerke, wobei die Haushaltsnetzwerke innerhalb des ersten Energieversorgungsnetzwerkes gekoppelt sind; und Steuern eines Flusses von elektrischer Energie zu und von den Haushaltsnetzwerken in Abhängigkeit von Bedarf an Energie und Überschuss an Energie der Haushaltsnetzwerke.

Gemäß einer Ausführungsform der vorliegenden Erfindung ist bereitgestellt ein Haushaltsnetzwerk-Messmodul, insbesondere für ein erstes Energieversorgungsnetzwerk gemäß einer der vorangehend beschriebenen Ausführungsformen oder für ein zweites Energieversorgungsnetzwerk gemäß einer vorangehend beschriebenen Ausführungsformen, das zum Bestimmen von Messdaten betreffend Energieflüssen in einem haushaltseigenen Energieleitungsnetzwerk ausgebildet ist.

Gemäß einer Ausführungsform der vorliegenden Erfindung ist bereitgestellt eine Haushaltsnetzwerk-Steuerung, insbesondere für ein erstes Energieversorgungsnetzwerk gemäß einer der vorangehend beschriebenen Ausführungsformen oder für ein zweites Energieversorgungsnetzwerk gemäß einer der vorangehend beschriebenen Ausführungsformen, die ausgebildet ist, Messdaten, insbesondere von dem Haushaltsnetzwerk-Messmodul gemäß der vorangehende beschriebenen Ausführungsform, zu erhalten und die ausgebildet ist, in Abhängigkeit von Bedarf, Erzeugung und/oder Speicherladezustand, einen Fluss von Energie zwischen einem haushaltseigenen Erzeuger, einem Verbraucher und einem Speicher zu steuern und einer ersten Steuerung einen Bedarf an Energie bzw. einen Überschuss an Energie anzuzeigen.

Gemäß einer Ausführungsform der vorliegenden Erfindung ist bereitgestellt ein Haushaltsnetzwerk, insbesondere für ein erstes Energieversorgungsnetzwerk gemäß einer der vorangehend beschriebenen Ausführungsformen oder für ein zweites Energieversorgungsnetzwerk gemäß einer der vorangehend beschriebenen Ausführungsformen, aufweisend: mindestens einen haushaltseigenen Verbraucher von elektrischer Energie; mindestens einen haushaltseigenen Erzeuger von elektrischer Energie; mindestens einen haushaltseigenen Speicher zum Speichern von Energie; ein Haushaltsnetzwerk-Messmodul gemäß einer vorangehend beschriebenen Ausführungsform; und eine Haushaltsnetzwerk-Steuerung gemäß einer vorangehend beschriebenen Ausführungsform.

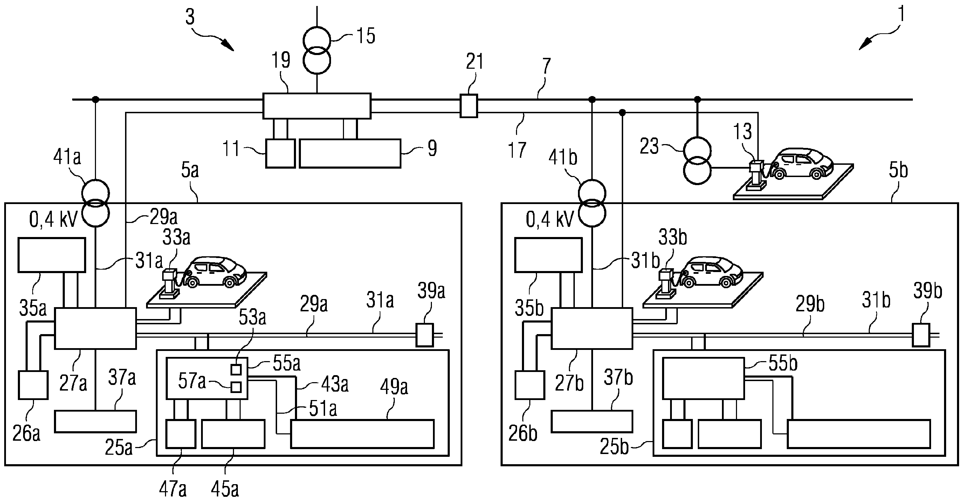

Weitere Vorteile und Merkmale der vorliegenden Erfindung ergeben sich aus der folgenden beispielhaften Beschreibung derzeit bevorzugter Ausführungsformen, auf die die Erfindung nicht beschränkt ist. Die Figur dieser Anmeldung ist lediglich als schematisch und als nicht maßstabsgetreu anzusehen.

Die Figur illustriert schematisch ein Energieversorgungssystem 1, welches ein zweites Energieversorgungsnetzwerk 3 gemäß einer Ausführungsform der vorliegenden Erfindung umfasst.

Das zweite Energieversorgungsnetzwerk (auch als Mittelspannungsnetzwerk bezeichnet) umfasst dabei zumindest zwei erste Energieversorgungsnetzwerke 5a, 5b, welche gemäß anderen Ausführungsformen allein Gegenstände der vorliegenden Erfindung sind.

Das zweite Energieversorgungsnetzwerk 3 umfasst ein zweites Energieleitungsnetzwerk 7 mit einem zweiten elektrischen Speicher 9, einem zweiten Erzeuger 11 und optional auch einem zweiten Verbraucher 13. Im illustrierten Ausführungsbeispiel ist der zweite Erzeuger 11 z.B. durch eine Fotovoltaik-Anlage, eine Geothermie-Anlage, eine Windturbine und/oder Windfarm bzw. als eine Wärmepumpe ausgebildet. Ferner ist der zweite Verbraucher 13 als eine Elektroladestation für ein Elektrofahrzeug ausgebildet. Energie wird auf dem zweiten Energieleitungsnetzwerk 7 bei einer Spannung von z.B. 110 kV befördert. Das zweite Energieversorgungsnetzwerk 3 ist über einen zweiten Transformator 15 mit einem nicht illustrierten Überlandübertragungssystem oder im Boden verlegtes Erdkabel verbunden, welches z.B. auf einem Spannungsniveau zwischen 400 kV und 500 kV operiert. Neben dem zweiten Energieleitungsnetzwerk 7 verfügt das zweite Energieversorgungsnetzwerk 3 auch über ein zweites Datenleitungsnetzwerk 17, um Kommunikationssignale zwischen einer zweiten Steuerung 19 und/oder dem zweiten Erzeuger 11 und/oder dem zweiten Speicher 9 und/oder dem zweiten Verbraucher 13 austauschen zu können.

Die zweite Steuerung 19 ist ausgebildet, Fluss von elektrischer Energie in dem zweiten Energieleitungsnetzwerk 7 zu und von den ersten Energieversorgungsnetzwerken 5a, 5b und/oder dem zweiten Speicher 9 und/oder dem zweiten Erzeuger 11 und/oder dem zweiten Verbraucher 13 in Abhängigkeit von Bedarf und Erzeugung der ersten Energieversorgungsnetzwerke 5a, 5b und optional auch andere Energieflüsse zu steuern. Dazu kann die zweite Steuerung 19 mit einer nicht illustrierten zweiten Schalteinheit ausgestattet sein, welche zum Schalten von Energieflüssen zwischen dem ersten Energieversorgungsnetzwerken 5a, 5b und/oder dem zweiten Speicher 9 und/oder dem zweiten Verbraucher 13 und/oder dem zweiten Erzeugen ausgebildet ist. Der zweite Speicher 9 kann insbesondere modular ausgeführt sein.

Das zweite Energieversorgungsnetzwerk 3 verfügt ferner über ein zweites Messmodul 21, zum Bestimmen von Messdaten betreffend Energieflüssen zwischen den ersten Energieversorgungsnetzwerken 5a, 5b und/oder dem zweiten Speicher 9 und/oder dem zweiten Verbraucher 13 und/oder dem zweiten Erzeuger 11. Dazu verfügt das zweite Messmodul 21 über nicht im Detail illustrierte Messsensoren an verschiedenen Stellen innerhalb des zweiten Energieleitungsnetzwerkes 7.

Die ersten Energieversorgungsnetzwerke (auch als lokale Netze bezeichnet) 5a, 5b sind sowohl (über die zweite Steuerung 19) innerhalb des zweiten Energieleitungsnetzwerk 7 als innerhalb des zweiten Datenleitungsnetzwerkes 17 mit der zweiten Steuerung 19 bzw. mit dem zweiten Erzeuger 11, dem zweiten Speicher 9 und dem zweiten Verbraucher 13 verbunden.

Die Ladestation 13 ist über einen weiteren Transformator 23 mit dem zweiten Energieleitungsnetzwerk 7 verbunden, um die auf dem zweiten Energieleitungsnetzwerk 7 anliegende Spannung auf einen geringeren Spannungswert herunter zu transformieren.

Gemäß einer Ausführungsform der vorliegenden Erfindung ist ein erstes Energieversorgungsnetzwerk, z.B. 5a oder 5b bereitgestellt, welches jeweils mindestens zwei Haushaltsnetzwerke (auch als Heimnetz bezeichnet) 25a, 26a (oder noch weitere z.B. insgesamt 5 bis 100 Haushaltsnetzwerke) aufweist. Das erste Energieversorgungsnetzwerk 5a umfasst eine erste Steuerung 27a, welche ausgebildet ist, Fluss von elektrischer Energie zu und von den Haushaltsnetzwerken 25a, 26a in Abhängigkeit von Bedarf und Erzeugung der Haushaltsnetzwerke 25a, 26a zu steuern. Dazu weist das erste Energieversorgungsnetzwerk 5a ein erstes Datenleitungsnetzwerk 29a auf, das zur Kommunikation mit den Haushaltsnetzwerken 25a, 26a ausgebildet ist. Ferner weist das erste Energieversorgungsnetzwerk 5a ein erstes Energieleitungsnetzwerk 31a auf, das zur Zuführung oder Abführung von elektrischer Energie an bzw. von den Haushaltsnetzwerken 25a, 26a ausgebildet ist. Ferner umfasst das erste Energieversorgungsnetzwerk 5a insbesondere und optional einen ersten elektrischen Verbraucher 33a, welcher insbesondere als eine Ladestation für ein Elektrofahrzeug ausgebildet sein kann. Ferner umfasst das erste Energieversorgungsnetzwerk 5a einen ersten (z.B. modularen) Speicher 35a und kann optional auch einen (nicht illustrierten) ersten Erzeuger umfassen. Der erste Speicher 35a, der erste Verbraucher 33a und ein zweiter Verbraucher 37a (z.B. Straßenbeleuchtung) sind alle über das Energieleitungsnetz 31a mit der ersten Steuerung 27a verbunden sowie auch über das erste Energieleitungsnetzwerk 29a.

Die erste Steuerung 27a kann Daten über die Menge der Erzeugung des ersten Erzeugers erhalten, kann Daten über den Ladezustand des ersten Speichers 35a erhalten und kann Daten über eine elektrische Charakteristik des ersten Energieversorgungsnetzwerkes 5a erhalten, sowie eine Vorhersagemenge von erwarteter Erzeugung des ersten Erzeugers.

Die erste Steuerung 27a ist ferner mit einem ersten Messmodul 39a verbunden, welches Messdaten betreffend Energieflüssen zwischen den Haushaltsnetzwerken 25a, 26a und/oder dem ersten Speicher 35a und/oder dem ersten Erzeuger und/oder dem ersten und zweiten Verbraucher 33a, 37a und/oder dem übergeordneten zweiten Netzwerk 3 bestimmt.

Auf dem ersten Energieleitungsnetzwerk 31a werden Energieströme bei einer Spannung von z.B. 400 V befördert. Dazu ist ein erster Transformator 41a zwischen dem ersten Energieleitungsnetzwerk 7 und dem zweiten Energieleitungsnetzwerk 31a verbunden, welcher eine entsprechende Spannungstransformation vornimmt.

Von dem Haushaltsnetzwerk 25a, 26a ist lediglich das Haushaltsnetzwerk 25a im größeren Detail illustriert. Das weitere bzw. die weiteren Haushaltsnetzwerke 26a, ... können ähnlich konfiguriert sein wie das Haushaltsnetzwerk 25a. Das Haushaltsnetzwerk 25a umfasst ein haushaltseigenes Energieleitungsnetzwerk 43a, über das ein haushaltseigener Verbraucher 45a, ein haushaltseigener Erzeuger 47a und ein haushaltseigener Speicher 49a verbunden sind. Das Haushaltsnetzwerk 25a weist ferner ein haushaltseigenes Datenleitungsnetzwerk 51a auf, über das ein Haushaltsnetzwerk-Messmodul 53a und eine Haushaltsnetzwerk-Steuerung 55a verbunden sind. Im hier illustrierten Ausführungsbeispiel umfasst die Haushaltsnetzwerk-Steuerung 55a das Haushaltsnetzwerk-Messmodul 53a. In anderen Ausführungsformen ist das Haushaltsnetzwerk-Messmodul 53a separat und unabhängig von der Haushaltsnetzwerk-Steuerung 55a. Das Haushaltsnetzwerk-Messmodul 53a ist zum Messen bzw. Bestimmen von aktuellen Verbraucherenergie, aktueller Erzeugung von Energie, Ladezustand des haushaltseigenen Speichers 49a, und insbesondere zum Bestimmen von prognostiziertem Verbrauch an Energie, insbesondere prognostizierter Erzeugung von Energie ausgebildet.

Über das haushaltseigene Datenleitungsnetzwerk 29a werden Daten bezüglich des aktuellen haushaltseigenen Verbrauchs, der aktuellen haushaltseigenen Erzeugung von Energie und auch bezüglich von Prognosen zum Verbrauch und Erzeugung und zu dem Ladezustand des haushaltseigenen Speichers an die erste Steuerung 27a des ersten Energieversorgungsnetzwerkes 5a übermittelt. Im illustrierten Ausführungsbeispiel umfasst die Haushaltsnetzwerk-Steuerung 55a auch ein Energiehandel-Modul 57a, das zum Energiehandel mit einem anderen Netzwerk ausgebildet ist, z.B. zum Energiehandel mit dem Haushaltsnetzwerk 26a.

Ein Überschuss an Energie (innerhalb eines betrachteten Netzwerkes) kann vorliegen, wenn (innerhalb des betrachteten Netzwerkes) eine Menge von Erzeugung an Energie größer ist als eine Menge von Verbrauch an Energie. Ein Bedarf an Energie kann vorliegen, wenn Erzeugung kleiner ist als Verbrauch.

Ausführungsformen der vorliegenden Erfindung können Energieversorgungssysteme in zumindest zwei Regelkreisen bzw. Regelstufen bzw. drei Regelkreisen bzw. Regelstufen bereitstellen. Ein Grundprinzip kann lauten, dass die kleinere Einheit, insbesondere die kleinste Einheit/der kleinste Teilnehmer im Ortsnetz seinen Bedarf selbst deckt bzw. durch eine entsprechende (Speicher-)Infrastruktur sicherstellt. Da der gesteigerte augenblickliche oder mittelfristige Bedarf nicht zu erwarten autark gedeckt werden kann, wird auf den nächst höheren Ebenen der Bedarf und die Produktion mehrerer Teilnehmer erfasst und entsprechend gesteuert. Dies trifft beispielsweise auf das erste Energieversorgungsnetzwerk zu, welches Bedarf bzw. Erzeugung mehrerer Haushaltsnetzwerke erfassen kann und demgemäß Energieflüsse bewirken kann. Das gleiche trifft auf das zweite Energieversorgungsnetzwerk 3 zu, welches Energiebedarf bzw. Erzeugung mehrerer erster Energieversorgungsnetzwerke 5a, 5b erfassen kann und dementsprechend Energieflüsse steuern kann.

Eine übergeordnete Steuerung kann z.B. die zweite Steuerung 19 auf der Mittelspannungsebene der Energieversorgungs-Unternehmen übernehmen. Neben der Steuerungsfunktion können zusätzlich auch durch Speicher- und Produktionseinheiten das Netz der Energieversorgungs-Unternehmen und die sich darin unterhalb befindlicher Netze möglichst autark versorgt werden.

Nachfolgend werden Ausführungsformen des Haushaltsnetzwerks (Heimnetz) des ersten Energieversorgungsnetzwerks (lokales Netz) und des Mittelspannungsnetzes bzw. des zweiten Energieversorgungsnetzwerkes beispielhaft aufgelistet:

### Heimnetz

Das Heimnetz besteht aus den folgenden Komponenten:
- Verbraucher
- Erzeuger
- Mobile Speicher und stationäre Speicher (je nach Bedarf modular erweiterbar)
- Steuerungseinheit (z.B. Multifunktionscontroller 55a der Figur, z.B. mit einem Smartmeter (elektrisches Messgerät zum Messen von Energieflüssen) als integralter Bestandteil Smartmeterdargestellt, kann auch separates Gerät mit Datenschnittstelle zu Smartmeter sein)
- Schnittstelle an nächsthöheres Netz

Weiterhin sind alle beteiligen Komponenten mittels Datenverbindung mit dem Multifunktionscontroller-Smartmeter verbunden.

Folgenden Daten werden an den Multifunktionscontroller-Smartmeter übertragen:
- Aktueller Verbrauch
- Aktuelle Produktion
- Aktueller Ladezustand (E-Car an Ladestation, lokaler Speicher)
- Voraussichtlicher Bedarf (bspw. voraussichtlicher Ladezustand, E-Car meldet mobil aktuellen Ladezustand, als auch den zu erwartenden Ladestand bei Ankunft an Ladestation im Heimnetz)

Neben den gemeldeten Daten werden noch zusätzliche Daten verarbeitet:
- Prognose des erwarteten Bedarfs (dazu rechnerische Verarbeitung der gemeldeten Daten und Vorausberechnung anhand Erfahrungswerte, sowie Ankündigungen)
- Prognose der erwarteten Erzeugung (Zugriff auf externe Wetter-Datenbank)

Der Multifunktionscontroller-Smartmeter übernimmt hier die zentrale Datenerfassung sowie Steuerung der Energieflüsse zwischen den einzelnen Komponenten.

Dazu besteht der Multifunktionscontroller-Smartmeter aus den folgenden Komponenten:
- Datenschnittstellen zu den Verbrauchern, Erzeugern, Speichern
- Datenschnittstelle an externe Datenbank
- Interner Daten-Speicher bzgl. der Energieflüsse aus der Vergangenheit (zwecks
   statistischer Vorhersage)
- Recheneinheit in Verbindung mit geeignetem Algorithmus für die Prognose des Bedarf und der Steuerung der Energieströme
- Interne Schalt- Regeleinheit zur Ermöglichung und Regulierung der Energieströme zwischen allen Teilnehmern
- Interne Meßeinheit zur Messung der aufgenommenen und abgegebenen Energiemenge
- Datenverbindung zur übergeordneten Netzsteuerungseinheit (in Figur: z.B. erste Steuerung 35a, 36b)

Der oben genannte Algorithmus soll in der Lage sein, den Bedarf an elektrischer Energie so zu steuern, dass primär entweder der Bedarf durch eigene Erzeugung und/oder den Speicher gedeckt werden kann, um das lokale Netz vor Leistungsspitzen möglichst zu verschonen. Für den Fall, dass der aktuelle Bedarf oder der prognostizierte Bedarf lokal nicht gedeckt werden kann, oder ein Überschuss vorliegt oder zu erwarten ist, wird dies an die übergeordnete Einheit (RTU) per Datenverbindung gemeldet, um diese Information im übergeordneten Regelkreis zu verarbeiten.

### Lokales Netz

Die übergeordnete Steuerungseinheit (RTU) steuert das lokale Netz. Zu diesem lokalen Netz gehören die folgenden Komponenten:
- RTU (Steuerungseinheit)
- Heimnetze
- Speicher (Booster - modular aufgebaut bestehend aus schnellen z.B. Kondensatoren und kontinuierlichen Speichern z.B. Batterien)
- Erzeuger
- Ladestation(en) für E-Mobilität
- Schnittstelle an nächsthöheres Netz (Mittelspannungsnetz des EVU)

Von den Heimnetzten werden die folgenden Daten per Datenleitung an die RTU übertragen:
- Aktuelle Bedarf
- Aktuelle Überproduktion
- Prognostizierter Bedarf
- Prognostizierte Überproduktion
- Vorhandene Energiemenge aus einem lokalen fixen oder mobilen (z.B. E-Mobil) Speicher, welche nicht verwendet werden

Ausserdem werden noch die folgenden Daten an die RTU übertragen:
- Aktuelle Produktion der dem lokalen Netz zugeordneten Erzeuger
- Aktueller Ladezustand der dem lokalen Netz zugeordneten Speicher

Neben den gemeldeten Daten werden noch zusätzliche Daten erfasst und verarbeitet:
- Daten zum eigenen Netzzustand (Spannung, Frequenz, Strom, Richtung, ...)
- Daten zum Zustand des übergeordneten Netzes
- Wettervorhersage für die zu erwartende Produktion/Verbrauch

Die RTU verbindet die folgenden Komponenten per Energieleitung und Datenverbindung:
- Heimnetze
- Ladestation(en) für E-Mobilität
- Speicher (auch modular ausführbar)
- Schnittstelle zu übergeordnetem Netz (Trafo)
- Energieerzeugung
- Verbraucher (beispielweise Stadtverwaltung)

Die RTU besteht aus folgenden Einheiten
- Datenschnittstellen zu Heimnetzen, Speichern, Erzeugern, Ladestation(en), nächsthöheres Netz
- Datenschnittstelle an externe Datenbank (bspw. PV-Wetter-Vorhersage)
- Interner Daten-Speicher bzgl. der Energieflüsse aus der Vergangenheit (zwecks statistischer Vorhersage)
- Recheneinheit in Verbindung mit geeignetem Algorithmus für die Prognose des Bedarf und der Steuerung der Energieflüsse
- Interne Schalteinheit zur Ermöglichung der Energieströme zwischen allen Teilnehmern im lokalen Netz
- Interne Meßeinheit zur Messung der aufgenommenen und abgegebenen Energiemenge
- Rechnereinheit, welche einen Energiehandel mit allen Energiemengen erlaubt, die über die RTU ausgesteuert werden.

### Mittelspannungsnetz EVU

Der Controller steuert das Mittelspannungsnetz des EVU. Zum Mittelspannungsnetz gehören die folgenden Komponenten:
- Controller (Steuerungseinheit)
- Lokale Ortsnetze (auf 400V Ebene)
- Schnell- und/oder Normal-Ladestation(en) für E-Mobilität, sowohl auf Ortnetz- (lokales Netz), als auch auf Mittelspannungsebene
- Speicher
- Erzeuger
- Schnittstelle an nächsthöheres Netz (Hochspannungsnetz - Netzleitstelle)

Aus den Ortsnetzen werden die folgenden Daten per Datenverbindung an den Controller übertragen:
- Aktuelle Bedarf
- Aktuelle Überproduktion
- Prognostizierter Bedarf
- Prognostizierte Überproduktion
- Vorhandene Energiemenge aus dem Speicher des Ortsnetz (modular aufgebaut bestehend aus schnellen Speichern, z.B. Kondensatoren, und kontinuierlichen Speichern, z.B. Batterien)

Neben den gemeldeten Daten werden noch zusätzliche Daten erfasst und verarbeitet:
- Daten zum eigenen Netzzustand (Spannung, Frequenz, Strom, Richtung, ...)
- Daten zum Zustand des übergeordneten Netzes (Hochspannung)
- Wettervorhersage für die zu erwartende Produktion/Verbrauch
- Ankündigung zu kommenden Lastspitzen

Der Controller verbindet die folgenden Komponenten per Energieleitung und Datenverbindung:
- Lokale Ortsnetze
- Speicher (auch modular ausführbar)
- Schnell- und/oder Normal-Ladestation(en) für E-Mobilität
- Schnittstelle zu übergeordnetem Netz (Hochspannungstrafo)
- Energieerzeugung
- Direkte Verbraucher (Großverbraucher, Industrie)

Der Controller besteht aus folgenden Einheiten
- Datenschnittstellen zu RTUs der lokalen Netze, Speichern, Erzeugern, nächsthöheres
   Netz
- Datenschnittstelle an externe Datenbank (bspw. PV-Vorhersage)
- Interner Daten-Speicher bzgl. der Energieflüsse aus der Vergangenheit (zwecks statistischer Vorhersage)
- Recheneinheit in Verbindung mit geeignetem Algorithmus für die Prognose des Bedarf
   und der Steuerung der Energieflüsse
- Interne Schalteinheit zur Ermöglichung der Energieströme zwischen allen Teilnehmern
- Interne Meßeinheit zur Messung der aufgenommenen und abgegebenen Energiemenge (interne Energieflüße und zusätzlich aufgenommene Energie aus dem Hochspannungsnetz)
- Rechnereinheit, welche einen Energiehandel mit allen Energiemengen erlaubt, die über den Controller ausgesteuert werden

Der hier genannte Algorithmus soll in der Lage sein, den (zusätzlichen) Bedarf/Produktion der Heimnetze (bzw. lokalen Netze) (und direkt verbundener Verbraucher) an elektrischer Energie so zu steuern, dass primär entweder der Bedarf durch eigene Erzeugung/Überschüsse und/oder den eigenen Speichern gedeckt werden kann. Dazu kann möglich sein, dass ein lokaler Überschuss durch Steuerung der RTU in den Speicher eines Heimnetzes (bzw. lokalen Netzes) umgeleitet wird, damit ein zu erwartender Bedarf dann im Heimnetz (bzw. lokalen Netz) abgedeckt werden kann. Ist das nicht der Fall, kann Energie in die übergeordnete Versorgungseben (Mittelspannungsebene des EVU) abgegeben werden. Falls die eigenen Möglichkeiten zur Gewinnung und Speicherung den Gesamtbedarf im lokalen Netz nicht decken können, besteht die Möglichkeit, aus der übergeordneten Versorgungseben (Mittelspannungsebene des EVU) zusätzlich Energie in das lokale Netz, über die RTU, zu leiten. Weiterhin soll die RTU die im internen Netz erzeugte oder aus Speichern im Netz geleitete Energiemenge messen und einen Energiehandel inklusive interner Abrechnung ermöglichen.

Der Controller auf der Mittelspannungsebene verfügt über dieselben Funktionalitäten wie die RTU, ist aber aufgrund der höheren Spannungsebene in der Lage, größere Energiemengen zu steuern und effizientere Großkomponenten (Groß-PV-Anlagen, Powercaps, Biogas, Geothermie, ...) anzubinden.

Folgende Wirkungen und Vorteile können durch Ausführungsformen der vorliegenden Erfindung erzielt werden:
Die Vorausberechnung und Prognose des lokalen Privat-Verbrauchers der am lokalen Netz angeschlossenen Verbraucher und die möglichst große Vorhaltung der benötigten Energiemenge im Heimnetz bzw. im lokalen Netzspeicher entlastet das Ortsnetz in Phasen eines hohen Bedarfes.

Notwendige Erweiterungen an der Infrastruktur durch geändertes Energieverbrauchsverhalten der Energiekonsumente hinsichtlich Kapazität und Stabilität im Ortsnetz können so verringert werden. Dazu ist eine selektive Abtrennung von problematischen Verbrauchern möglich.

Weiterhin wird dadurch die Deckung des Eigenbedarfs bei in Zukunft deutlich steigendem Bedarf optimiert und es wird der private Energiehandel ermöglicht.

Weiterhin kann der EVU hier als Energiehändler auftreten und Lücken in der möglichst autarken Selbstversorgung der Heimnetzwerke zu schließen und generell sein Netz gegen Entgelt zur Verfügung stellt. Damit kann die aktuelle Infrastruktur bei steigendem Bedarf weiter so erhalten bleiben und notwendige Ausbaumaßnahmen in die Zukunft verschoben werden.

Ausführungsformen der vorliegenden Erfindung können die folgenden Merkmale aufweisen:
- zwei oder drei kommunizieren Regel- und Steuerkreise, welche durch die angebundenen Komponenten den Verbrauch und die Bereitstellung optimieren. Dazu müssen die Komponenten wie oben aufgelistet zur Verfügung stehen und jeweils per Daten- und Energieverbindung verbunden sein. Die zwei oder drei Steuereinheiten (Multifunktionscontroller-Smartmeter (z.B. haushaltseigene Steuerung 55a, 55b), RTU (z.B. erste Steuerung 35a, 35b) und Controller (z.B. zweite Steuerung 19)) optimieren den Energiefluß.

Es wird darauf hingewiesen, dass Merkmale bzw. Komponenten von unterschiedlichen Ausführungsformen, die mit den entsprechenden Merkmalen bzw. Komponenten der Ausführungsform nach gleich oder zumindest funktionsgleich sind, mit den gleichen Bezugszeichen oder mit anderen Bezugszeichen versehen sind, welche sich lediglich in der ersten Ziffer und/oder durch einen angehängten Buchstaben von dem Bezugszeichen einer entsprechenden Komponente unterscheidet. Zur Vermeidung von unnötigen Wiederholungen werden bereits anhand einer vorher beschriebenen Ausführungsform erläuterte Merkmale bzw. Komponenten an späterer Stelle nicht mehr im Detail erläutert.

## Patentansprüche

1. Erstes Energieversorgungsnetzwerk (5a, 5b), aufweisend:
mindestens zwei Haushaltsnetzwerke (25a, 26a);
eine erste Steuerung (27a), welche ausgebildet ist, Fluss von elektrischer Energie zu und von den Haushaltsnetzwerken (25a, 26a) in Abhängigkeit von Bedarf und Erzeugung der Haushaltsnetzwerke zu steuern, wobei jedes Haushaltsnetzwerk (25a, 26a) aufweist:
mindestens einen haushaltseigenen Verbraucher (45a) von elektrischer Energie, mindestens einen haushaltseigenen Erzeuger (47a) von elektrischer Energie und mindestens einen haushaltseigenen Speicher (49a) zum Speichern von Energie;
ein Haushaltsnetzwerk-Messmodul (53a), das zum Bestimmen von Messdaten betreffend Energieflüsse in dem haushaltseigenen Energieleitungsnetzwerk (43a) ausgebildet ist,
eine Haushaltsnetzwerk-Steuerung (55a), die die Messdaten erhält und die ausgebildet ist, in Abhängigkeit von Bedarf, Erzeugung und/oder Speicherladezustand, einen Fluss von Energie zwischen dem haushaltseigenen Erzeuger, Verbraucher und Speicher zu steuern und der ersten Steuerung (27a) einen Bedarf an Energie bzw. einen Überschuss an Energie anzuzeigen.

2. Erstes Energieversorgungsnetzwerk gemäß dem vorangehenden Anspruch, wobei das erste Energieversorgungsnetzwerk ferner aufweist:
ein erstes Datenleitungsnetzwerk (29a), das zur Kommunikation mit den Haushaltsnetzwerken, insbesondere den Haushaltsnetzwerk-Steuerungen ausgebildet ist;
ein erstes Energieleitungsnetzwerk (31a), das zur Zuführung und Abführung von elektrischer Energie an bzw. von den Haushaltsnetzwerken ausgebildet ist;
einen ersten Speicher (35a) zur Speicherung von Energie;
insbesondere mindestens einen ersten elektrischen Erzeuger zur Erzeugung von elektrischer Energie;
insbesondere mindestens einen ersten elektrischen Verbraucher (33a) von elektrischer Energie, insbesondere zumindest eine Ladestation von E-Mobilität ausweisend.

3. Erstes Energieversorgungsnetzwerk gemäß einem der vorangehenden Ansprüche, wobei zumindest eines der Haushaltsnetzwerke aufweist:
ein haushaltseigenes Energieleitungsnetzwerk (43a), über das der haushaltseigene Verbraucher, der haushaltseigene Erzeuger und der haushaltseigene Speicher verbunden sind;
ein haushalteigenes Datenleitungsnetzwerk (51a), über das das Haushaltsnetzwerk-Messmodul und die Haushaltsnetzwerk-Steuerung verbunden sind,
wobei das Haushaltsnetzwerk-Messmodul (53a) insbesondere zum Messen und/oder Bestimmen von aktuellem Verbrauch an Energie, aktueller Erzeugung von Energie, Ladezustand des haushaltseigenen Speichers, insbesondere prognostiziertem Verbrauch an Energie, insbesondere prognostizierter Erzeugung von Energie ausgebildet ist.

4. Erstes Energieversorgungsnetzwerk gemäß einem der vorangehenden Ansprüche, wobei von den Haushaltsnetzwerken zumindest eines der folgenden Daten über das Datenleitungsnetzwerk an die erste Steuerung übermittelt wird:
aktueller haushaltseigener Verbrauch an Energie;
aktuelle haushaltseigene Erzeugung von Energie;
prognostizierter haushaltseigener Verbrauch an Energie;
prognostizierte haushaltseigene Erzeugung von Energie;
Ladezustand des haushaltseigenen Speichers.

5. Erstes Energieversorgungsnetzwerk gemäß einem der vorangehenden Ansprüche, wobei zumindest eines der Haushaltsnetzwerke und/oder das erste Energieversorgungsnetzwerk aufweist:
ein Energiehandel-Modul (57a), das zum Energiehandel mit einem anderen Netzwerk ausgebildet ist.

6. Erstes Energieversorgungsnetzwerk gemäß einem der vorangehenden Ansprüche, wobei zumindest eines der Haushaltsnetzwerke und/oder das erste Energieversorgungsnetzwerk aufweist:
eine Datenschnittstelle zu einen externen Server zum Erhalten von Wetter-Daten, insbesondere Wetter-Vorhersage-Daten, die von der ersten Steuerung und/oder der haushaltseigenen Steuerung zum Steuern der Energieflüsse verwendet werden; und/oder
einen Datenspeicher zum Aufzeichnen von Energieflüssen, wobei die jeweilige Steuerung ausgebildet ist, aus den aufgezeichneten Energieflüssen eine Vorhersage über zukünftige Energieflüsse zu erstellen.

7. Erstes Energieversorgungsnetzwerk gemäß einem der vorangehenden Ansprüche, wobei die erste Steuerung (27a) ferner zumindest eines der folgenden Daten erhält:
Menge der Erzeugung des ersten Erzeugers;
Ladezustand des ersten Speichers;
elektrische Charakteristik des ersten Energieversorgungsnetzwerks;
elektrische Charakteristik eines übergeordneten zweiten Energieversorgungsnetzwerks;
Vorhersage über Menge von erwarteter Erzeugung des ersten Erzeugers.

8. Erstes Energieversorgungsnetzwerk gemäß einem der vorangehenden Ansprüche, wobei die erste Steuerung (27a) zumindest eines der folgenden aufweist oder damit verbunden ist:
eine erste Schalteinheit zum Schalten von Energieflüssen zwischen den Haushaltsnetzwerken und/oder dem ersten Speicher und/oder erstem Erzeuger und/oder erstem Verbraucher und/oder einem übergeordneten zweiten Energieversorgungsnetzwerk;
ein erstes Messmodul (39a) zum Bestimmen von Messdaten betreffend Energieflüsse zwischen den Haushaltsnetzwerken und/oder dem ersten Speicher und/oder erstem Erzeuger und/oder erstem Verbraucher und/oder einem übergeordneten zweiten Netzwerk.

9. Erstes Energieversorgungsnetzwerk gemäß einem der vorangehenden Ansprüche, wobei die erste Steuerung ausgebildet ist, einen Energiefluss aus einem übergeordneten zweiten Energieversorgungsnetzwerk zu einem Haushaltsnetzwerk zu schalten, dessen Verbrauch nicht durch Energie aus eigener Erzeugung oder aus eigenem Speicher gedeckt werden kann.

10. Erstes Energieversorgungsnetzwerk gemäß einem der vorangehenden Ansprüche, wobei die erste Steuerung ausgebildet ist, einen Energiefluss aus einem Haushaltsnetzwerk mit Energieüberschuss zu einem Haushaltsnetzwerk mit Energiebedarf zu schalten.

11. Erstes Energieversorgungsnetzwerk gemäß einem der vorangehenden Ansprüche,
wobei das haushaltseigene Energieleitungsnetzwerk (43a) ausgebildet ist, Energieströme einer Haushaltsspannung von 150 V bis 250 V, insbesondere 220 V, zu befördern,
wobei das erste Energieleitungsnetzwerk (31a) ausgebildet ist, Energieströme einer ersten Spannung von 300 V bis 500 V, insbesondere 400 V, zu befördern,
wobei zwischen dem ersten Energieleitungsnetzwerk und dem haushaltseigenen Energieleitungsnetzwerk ein Transformator angeordnet ist, um zwischen der ersten Spannung und der Haushaltsspannung zu transformieren.

12. Zweites Energieversorgungsnetzwerk (3), aufweisend:
zumindest zwei erste Energieversorgungsnetzwerke (5a, 5b) gemäß einem der vorangehenden Ansprüche;
ein zweites Energieleitungsnetzwerk (7) mit einem zweiten Speicher und/oder einem zweiten Erzeuger und/oder einem zweiten Verbraucher;
eine zweite Steuerung (19), welche ausgebildet ist, Fluss von elektrischer Energie in dem zweiten Energieleitungsnetzwerk und zu und von den ersten Energieversorgungsnetzwerken und/oder zweitem Speicher und/oder zweitem Erzeuger und/oder zweitem Verbraucher in Abhängigkeit von Bedarf und Erzeugung der ersten Energieversorgungsnetzwerken zu steuern.

13. Zweites Energieversorgungsnetzwerk gemäß Anspruch 12, wobei die zweite Steuerung zumindest eines der folgenden aufweist oder damit verbunden ist:
eine zweite Schalteinheit zum Schalten von Energieflüssen zwischen den ersten Energieversorgungsnetzwerken und/oder dem zweiten Speicher und/oder dem zweiten Verbraucher und/oder dem zweiten Erzeuger;
ein zweites Messmodul (21) zum Bestimmen von Messdaten betreffend Energieflüsse zwischen den ersten Energieversorgungsnetzwerken und/oder dem zweiten Speicher und/oder dem zweiten Verbraucher und/oder dem zweiten Erzeuger.

14. Zweites Energieversorgungsnetzwerk gemäß Anspruch 12 oder 13, wobei von den ersten Energieversorgungsnetzwerken zumindest eines der folgenden Daten über das erste Datenleitungsnetzwerk an die zweite Steuerung übermittelt wird:
aktueller Verbrauch an Energie;
aktuelle Erzeugung von Energie;
prognostizierter Verbrauch an Energie;
prognostizierte Erzeugung von Energie;
Ladezustand des ersten Speichers.

15. Zweites Energieversorgungsnetzwerk gemäß einem der Ansprüche 12 bis 14, ausgebildet, den Bedarf und/oder die Erzeugung von Energie von ersten Energieversorgungsnetzwerken so zu steuern, dass durch Energieflüsse zwischen ihnen der jeweilige Bedarf gedeckt ist, insbesondere umfassend, Energie aus einem ersten Energieversorgungsnetzwerke in einen ersten Speicher eines anderen ersten Energieversorgungsnetzwerkes zu leiten, um einen zukünftigen Bedarf des anderen ersten Energieversorgungsnetzwerkes zu decken.

16. Verfahren, elektrischen Energiebedarf mindestens zweier Haushaltsnetzwerke (25a, 26a) zu decken, wobei jedes Haushaltsnetzwerk mindestens einen haushaltseigenen Verbraucher (45a) von elektrischer Energie, mindestens einen haushaltseigenen Erzeuger (47a) von elektrischer Energie und mindestens einen haushaltseigenen Speicher (49a) zum Speichern von Energie aufweist, wobei das Verfahren aufweist:
Bestimmen von Messdaten betreffend Energieflüssen in einem haushaltseigenen Energieleitungsnetzwerk jedes Haushaltsnetzwerkes,
Steuern, basierend auf den Messdaten, in Abhängigkeit von Bedarf, Erzeugung und/oder Speicherladezustand, eines Flusses von Energie zwischen dem haushaltseigenen Erzeuger, Verbraucher und Speicher jedes Haushaltsnetzwerkes;
einer ersten Steuerung (27a) eines ersten Energieversorgungsnetzwerkes (5a), Anzeigen eines Bedarfes an Energie bzw. eines Überschusses an Energie zumindest eines der Haushaltsnetzwerke, wobei die Haushaltsnetzwerke innerhalb des ersten Energieversorgungsnetzwerkes gekoppelt sind; und
Steuern eines Flusses von elektrischer Energie zu und von den Haushaltsnetzwerken in Abhängigkeit von Bedarf an Energie und Überschuss an Energie der Haushaltsnetzwerke.

17. Haushaltsnetzwerk-Messmodul (53a), insbesondere für ein erstes Energieversorgungsnetzwerk (5a, 5b) gemäß einem der Ansprüche 1 bis 11 oder für ein zweites Energieversorgungsnetzwerk (3) gemäß einem der Ansprüche 12 bis 15,
das zum Bestimmen von Messdaten betreffend Energieflüssen in einem haushaltseigenen Energieleitungsnetzwerk (43a) ausgebildet ist.

18. Haushaltsnetzwerk-Steuerung (55a), insbesondere für ein erstes Energieversorgungsnetzwerk (5a, 5b) gemäß einem der Ansprüche 1 bis 11 oder für ein zweites Energieversorgungsnetzwerk (3) gemäß einem der Ansprüche 12 bis 15,
die ausgebildet ist, Messdaten, insbesondere von dem Haushaltsnetzwerk-Messmodul (53a) gemäß dem vorangehenden Anspruch, zu erhalten und die ausgebildet ist, in Abhängigkeit von Bedarf, Erzeugung und/oder Speicherladezustand, einen Fluss von Energie zwischen einem haushaltseigenen Erzeuger, einem Verbraucher und einem Speicher zu steuern und einer ersten Steuerung (27a) einen Bedarf an Energie bzw. einen Überschuss an Energie anzuzeigen.

19. Haushaltsnetzwerk (25a, 26a), insbesondere für ein erstes Energieversorgungsnetzwerk (5a, 5b) gemäß einem der Ansprüche 1 bis 11 oder für ein zweites Energieversorgungsnetzwerk (3) gemäß einem der Ansprüche 12 bis 15, aufweisend:
mindestens einen haushaltseigenen Verbraucher (45a) von elektrischer Energie;
mindestens einen haushaltseigenen Erzeuger (47a) von elektrischer Energie;
mindestens einen haushaltseigenen Speicher (49a) zum Speichern von Energie;
ein Haushaltsnetzwerk-Messmodul (53a) gemäß Anspruch 17; und
eine Haushaltsnetzwerk-Steuerung (55a) gemäß Anspruch 18.
